(19) Europäisches Patentamt
European Patent Office
Office européen des brevets

(11) **EP 4 131 094 A1**

(12) **EUROPEAN PATENT APPLICATION**
published in accordance with Art. 153(4) EPC

(43) Date of publication:
**08.02.2023 Bulletin 2023/06**

(21) Application number: **21870883.2**

(22) Date of filing: **21.06.2021**

(51) International Patent Classification (IPC):
**G06Q 10/00** (2006.01)    **G06N 20/00** (2019.01)

(52) Cooperative Patent Classification (CPC):
**G06N 20/00; G06Q 10/00**

(86) International application number:
**PCT/CN2021/101314**

(87) International publication number:
**WO 2022/062502 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 23.09.2020  CN 202011010325
23.09.2020  CN 202011010347
29.10.2020  CN 202011182449

(71) Applicant: **Ennew Digital Technology Co., Ltd.
Langfang, Hebei 065001 (CN)**

(72) Inventor: **YANG, Jie
Beijing 100020 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(54) **PREDICTION METHOD AND APPARATUS, READABLE MEDIUM, AND ELECTRONIC DEVICE**

(57)    Disclosed in the present invention are a prediction method and apparatus, a readable medium, and an electronic device. The method comprises: determining feature information of a target device and detection point data information corresponding to the target device; determining, on the basis of the feature information of the target device and the detection point data information corresponding to the target device, a probability distribution model of feature data of the target device and a probability distribution model of non-shared data; determining the weight of the non-shared data according to the probability distribution model of the feature data and the probability distribution model of the detection point data; establishing a federated learning model according to the non-shared data, the weight of non-shared data, and a device failure label corresponding to the non-shared data; and performing device failure prediction for the target device according to the federated learning model. The technical solution provided by the present invention can migrate non-shared data to the target device, establish a relationship between the feature data of the target device and the device failure, without sharing the feature data between the devices, thus ensuring data security.

Determine feature information of a target device and detection point data information corresponding to the target device — 101

Determine, based on the feature information of the target device and the detection point data information corresponding to the target device, a probability distribution model of feature data of the target device and a probability distribution model of detection point data with unshared data — 102

Determine a weight of the unshared data according to the probability distribution model of the feature data and the probability distribution model of the detection point data — 103

Establish a federated learning model according to the unshared data, the weight of the unshared data and a device fault label corresponding to the unshared data — 104

Predict a device fault of the target device according to the federated learning model — 105

FIG. 1

Processed by Luminess, 75001 PARIS (FR)

EP 4 131 094 A1

## Description

## TECHNICAL FIELD

The present invention relates to the field of energy and Internet of Things technologies, and in particular, to a device fault prediction method and apparatus, a device state prediction method and apparatus, a readable medium and an electronic device.

## BACKGROUND

Once an industrial device in an intelligent manufacturing system fails, normal operation of the intelligent manufacturing system may be affected, resulting in a very serious impact. Therefore, generally, there is a need to predict a device fault of the industrial device. At present, in the prediction of an industrial device, since operation data of the industrial device does not include label data, there is a need to collect historical operation data of several other industrial devices and label data corresponding to the historical operation data. A mapping relationship between the historical operation data and device fault prediction is established by a machine learning method, a device fault prediction model is obtained, and the device fault of the industrial device is predicted using the device fault prediction model. However, in the above technical solution, in order to learn effective models, when device faults of a plurality of industrial devices are predicted, the historical operation data of the industrial devices and the label data corresponding to the historical operation data are possibly required to be shared. As a result, data security between the industrial devices is low.

Predictive device maintenance is to predict a probability of device failure or the remaining service life of a device based on feature information of an operation state of the device. A data-driven method is to use historical operation data of a device, including measurements of sensors of the device, to establish a mapping relationship between the measurements and fault probabilities of the device through machine learning. In order to learn effective models, high-quality annotation data is generally required. that is, a large amount of fault label data is required. Fault data of a single device is limited, and a plurality of devices of a same type are required to be combined to obtain sufficient data. Existing technical solutions can solve the problem of device fault prediction, but data is shared between different devices. At present, the existing technical solutions are to directly share data of various devices in an Internet of Things without considering the need to protect data privacy between the devices in the Internet of Things.

In addition, automatic monitoring of device states has become an important technical means to ensure normal operation of devices. Device state prediction is to predict a probability of device fault or the remaining service life of a device according to operation data of the device. At present, for a to-be-predicted device for which a device state label is difficult to obtain, a large number of annotation data is acquired by acquiring historical operation data of other devices and device state label data corresponding to the historical operation data. Then, a mapping relationship between the historical operation data and the device state label data is established based on a machine learning method, to obtain a device state prediction model, so as to realize device state prediction on the to-be-predicted device based on the device state prediction model. However, data distribution of historical operation data generated by different devices varies, resulting in relatively low accuracy of the device state prediction model obtained by using the above technical solution.

## SUMMARY

With the above technical problems existing in the prior art, the present invention provides a device fault prediction method and apparatus, a computer-readable storage medium and an electronic device, so that the unshared data may be migrated to the target device to establish a relationship between the feature data and device faults of the target device without sharing feature data between devices, thereby ensuring data security.

In a first aspect, the present invention discloses a device fault prediction method, including: determining feature information of a target device and detection point data information corresponding to the target device; determining, based on the feature information of the target device and the detection point data information corresponding to the target device, a probability distribution model of feature data of the target device and a probability distribution model of detection point data with unshared data; determining a weight of the unshared data according to the probability distribution model of the feature data and the probability distribution model of the detection point data; establishing a federated learning model according to the unshared data, the weight of the unshared data and a device fault label corresponding to the unshared data; and predicting a device fault of the target device according to the federated learning model.

In a second aspect, the present invention discloses a device fault prediction apparatus, including: an information determination module configured to determine feature information of a target device and detection point data information corresponding to the target device; a probability model determination module configured to determine, based on the feature information of the target device and the detection point data information corresponding to the target device, a probability distribution model of feature data of the target device and a probability distribution model of detection point data with unshared data; a weight determination module configured to determine a weight of the unshared data according to the probability distribution model of the feature data and the probability distribution model of the detection point data; a model establishment module configured to establish a federated learning model according to the unshared data, the weight of the unshared data and a device fault label corresponding to the unshared data; and a prediction module configured to predict a device fault of the target device according to the federated learning model.

In a third aspect, the present invention discloses a device fault prediction method, including: acquiring, according to attributes of a target device, a training data set configured to establish a prediction model for the target device, wherein sample data in the data set is shared data; calculating a weight of each piece of sample data in the training data set; training a fault prediction local model of the target device by using the weights; establishing a combined model based on the fault prediction local model and a combined learning algorithm; and performing fault prediction on the target device according to the combined model.

In a fourth aspect, the present invention discloses a device fault prediction apparatus, wherein the device fault prediction apparatus includes: a data acquisition module, a weight calculation module, a local model training module, a combined model establishment module and a fault prediction module, wherein the data acquisition module is configured to acquire, according to attributes of a target device, a training data set configured to establish a prediction model for the target device, wherein sample data in the data set is shared data; the weight calculation module is configured to calculate a weight of each piece of sample data in the training data set; the local model training module is configured to train a fault prediction local model of the target device by using the weights; the combined model establishment module is configured to establish a combined model based on the fault prediction local model and a combined learning algorithm; and the fault prediction module is configured to perform fault prediction on the target device according to the combined model.

In a fifth aspect, the present invention provides a device state prediction method, including: acquiring at least two pieces of feature data corresponding to a target device, at least two pieces of model training data corresponding to at least two reference devices and device state labels corresponding to the model training data respectively, the target device and the reference devices being of a same device type; determining error weights corresponding to the model training data according to the feature data; and performing model training according to the model training data, the device state labels corresponding to the model training data respectively and the error weights corresponding to the model training data respectively, to determine a device state prediction model, the device state prediction model being configured to predict a device state of the target device.

In a sixth aspect, the present invention provides a device state prediction apparatus, including: an acquisition module configured to acquire at least two pieces of feature data corresponding to a target device, at least two pieces of model training data corresponding to at least two reference devices and device state labels corresponding to the model training data respectively, the target device and the reference devices being of a same device type; a weight determination module configured to determine error weights corresponding to the model training data according to the feature data; and a training module configured to perform model training according to the model training data, the device state labels corresponding to the model training data respectively and the error weights corresponding to the model training data respectively, to determine a device state prediction model, the device state prediction model being configured to predict a device state of the target device.

In a seventh aspect, the present invention provides a computer-readable storage medium, including execution instructions, when a processor of an electronic device executes the execution instructions, the electronic device performing the method as described in the first aspect or the method as described in the second aspect.

In an eighth aspect, the present invention provides an electronic device, including a processor and a memory storing execution instructions, when the processor executing the execution instructions stored by the memory, the processor performing the method as described in the first aspect or the method as described in the second aspect.

The present invention provides a device fault prediction method and apparatus, a device state prediction method and apparatus, a computer-readable storage medium and an electronic device. The method involves determining feature information of a target device and detection point data information corresponding to the target device, then determining, based on the feature information of the target device and the detection point data information corresponding to the target device, a probability distribution model of feature data of the target device and a probability distribution model of detection point data with unshared data, then determining a weight of the unshared data according to the probability distribution model of the feature data and the probability distribution model of the detection point data, then establishing a federated learning model according to the unshared data, the weight of the unshared data and a device fault label corresponding to the unshared data, and finally predicting a device fault of the target device according to the federated learning model. With the technical solution according to the present invention, the unshared data is migrated to the target device to establish a relationship between the feature data and device faults of the target device without sharing feature data between devices, thereby ensuring data security.

Further effects of the above non-conventional preferred manners will be described below in combination with specific implementations.

BRIEF DESCRIPTION OF THE DRAWINGS

In order to more clearly illustrate the technical solutions in embodiments of the present invention or the prior art, the accompanying drawings used in the description of the embodiments or the prior art will be briefly introduced below. It is apparent that, the accompanying drawings in the following description are only some embodiments of the present invention, and other drawings can be obtained by those of ordinary skill in the art from the provided drawings without creative efforts.

FIG. 1 is a schematic flowchart of a device fault prediction method according to an embodiment of the present invention;
FIG. 2 is a schematic flowchart of another device fault prediction method according to an embodiment of the present invention;
FIG. 3 is a schematic flowchart of a device fault prediction method according to an embodiment of the present invention;
FIG. 4 is a schematic flowchart of another device fault prediction method according to an embodiment of the present invention;
FIG. 5 is a schematic flowchart of a device state prediction method according to an embodiment of the present invention;
FIG. 6 is a schematic flowchart of another device state prediction method according to an embodiment of the present invention;
FIG. 7 is a schematic structural diagram of a device fault prediction apparatus according to an embodiment of the present invention;
FIG. 8 is a schematic structural diagram of a device fault prediction apparatus according to an embodiment of the present invention;
FIG. 9 is a schematic structural diagram of a device state prediction apparatus according to an embodiment of the present invention; and
FIG. 10 is a schematic structural diagram of an electronic device according to an embodiment of the present invention.

**DETAILED DESCRIPTION**

In order to make the objectives, technical solutions and advantages of the embodiments of the present invention clearer, the technical solutions of the present invention are clearly and completely described below with reference to specific embodiments and corresponding drawings. Apparently, the embodiments described are merely some of rather than all of the embodiments of the present invention. All other embodiments acquired by those skilled in the art without creative efforts based on the embodiments of the present invention shall fall within the protection scope of the present invention.

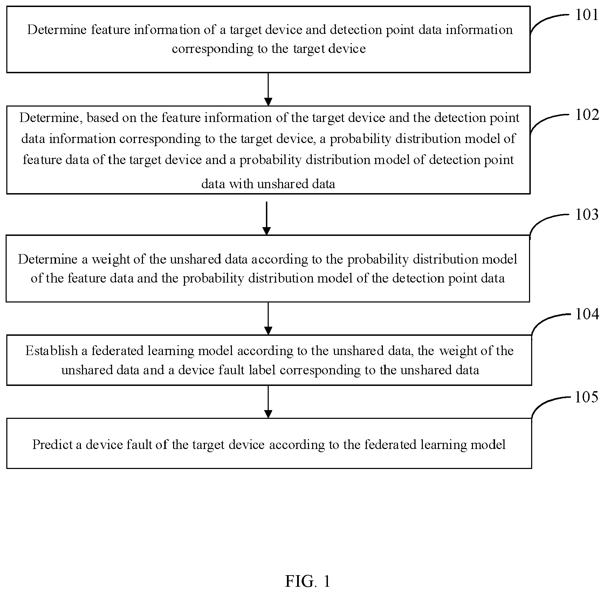

FIG. 1 is a schematic flowchart of a device fault prediction method according to an embodiment of the present invention. As shown in FIG. 1, an embodiment of the present invention provides a device fault prediction method, including the following steps.

In step 101, feature information of a target device and detection point data information corresponding to the target device are determined.

Specifically, the target device is any industrial device of an intelligent manufacturing system, which is not limited in the embodiments of the present invention. Preferably, the target device is an energy device, such as a gas boiler, an internal combustion engine, a steam turbine, a cogeneration device or a photovoltaic device.

Specifically, the feature information of the target device refers to attributes or functions of feature data of the target device.

Specifically, the detection point data information refers to attributes or functions of detection point data.

It is to be noted that the detection point data includes unshared data.

In step 102, a probability distribution model of feature data of the target device and a probability distribution model of detection point data with unshared data are determined based on the feature information of the target device and the detection point data information corresponding to the target device.

Specifically, a plurality of pieces of feature data of the target device is provided. Each piece of the feature data includes feature values of several features correspondingly in the target device respectively. The several features are factors affecting device faults, which are specifically required to be determined based on actual scenarios. For example, if the target device is a gas boiler, the several features include, but are not limited to, a gas flow rate, a gas temperature, an exhaust temperature, a flue gas flow rate, gas pressure, ON and OFF states, gas humidity and flue gas pressure, etc.

Specifically, the feature data follows continuous probability distribution, so the probability distribution model of the feature data may be a normal distribution model or an exponential distribution model, which is not limited in the embodiment of the present invention. Preferably, the probability distribution model of the feature data is a Gaussian mixture model mixed with a plurality of normal distribution models. The normal distribution model is also called a Gaussian distribution model.

Specifically, the probability distribution model of detection point data is the same as the probability distribution model of the feature data, may preferably a Gaussian mixture model, and certainly, may also be other probability distribution models, which is specifically required to be determined according to actual situations and is not specifically limited herein.

In one embodiment of the present invention, the step of determining, based on the feature information of the target device and the detection point data information corresponding to the target device, a probability distribution model of feature data of the target device and a probability distribution model of detection point data with unshared data, includes: determining, based on the feature information of the target device and the detection point data information corresponding to the target device, the feature data of the target device and the detection point data with the unshared data; calculating data distribution of the feature data according to a feature data parameter model, and determining the feature data parameter model with determined parameters as the probability distribution model of the feature data; and calculating data distribution of the detection point data according to a detection point data parameter model, and determining the detection point data parameter model with determined parameters as the probability distribution model of the detection point data.

Specifically, the feature data parameter model may be a Gaussian model or a Gaussian mixture model. The Gaussian mixture model is preferred. The detection point data parameter model is the same as the feature data parameter model, which is not described in detail in the embodiment of the present invention.

Specifically, the probability distribution model of the feature data determines the model parameters by substituting the feature data into the Gaussian mixture model for calculation. A calculation method may be an EM algorithm. The Gaussian mixture model with the determined model parameters is determined as the probability distribution model of the feature data.

Specifically, the detection point data parameter model determines the model parameters by substituting a plurality of pieces of detection point data into the Gaussian mixture model for calculation. A calculation method may be an EM algorithm. The Gaussian mixture model with the determined model parameters is determined as the probability distribution model of the detection point data.

In step 103, a weight of the unshared data is determined according to the probability distribution model of the feature data and the probability distribution model of the detection point data.

In the embodiment, unshared data of a detection point is migrated to the target device through weights of the unshared data. In other words, data association between the detection point and the target device is established. The detection point does not directly obtain the feature data of the target device. That is, no data is shared between the target device and the detection point, thereby ensuring the data security.

In one embodiment of the present invention, the step of determining a weight of the unshared data according to the probability distribution model of the feature data and the probability distribution model of the detection point data includes: determining a target device distribution probability of the unshared data according to the probability distribution model of the feature data; determining a detection point distribution probability of the unshared data according to the probability distribution model of the detection point data; and determining a ratio of the target device distribution probability of the unshared data to the detection point distribution probability of the unshared data as the weight of the unshared data.

In the embodiment, the ratio of the target device distribution probability of the unshared data to the detection point distribution probability of the unshared data is determined as the weight of the unshared data, so as to migrate unshared data on a detection point to the target device without sharing the feature data of the target device at the same time, thereby ensuring data security.

Specifically, the unshared data is substituted into the probability distribution model of the feature data, and a value outputted by the probability distribution model of the feature data is a target device distribution probability of the unshared data.

Specifically, the unshared data is substituted into the probability distribution model of the detection point data, and a value outputted by the probability distribution model of the detection point data is a detection point distribution probability of the unshared data.

In step 104, a federated learning model is established according to the unshared data, the weight of the unshared data and a device fault label corresponding to the unshared data.

In the embodiment, the federated learning model is established according to the unshared data, the weight of the unshared data and the device fault label corresponding to the unshared data, so as to migrate the unshared data to the target device without sharing the feature data of the target device, thereby ensuring data security.

It is to be noted that the feature data and the detection point data of the target device are distributed at different detection points in an Internet of Things, and sharing data for model training may cause data security problems. In the embodiment of the present invention, the unshared data is migrated to the target device according to the unshared data in the detection point data, the weight of the unshared data and the device fault label corresponding to the unshared data, so that no data is shared between the detection points, thereby preventing the data security problems caused by direct data sharing. The detection points are nodes capable of data processing and data interaction, including, but not limited to, any one or more of edge servers, edge gateways and edge controllers.

Specifically, the device fault label may be a probability of failure of a feature information prediction device of a device operation state. For example, the device fault label may be a fault type or a fault degree, which is not limited in the embodiment of the present invention and is specifically determined according to an actual requirement. It is to be noted that the embodiment of the present invention is not intended to limit a method for acquiring the device fault label corresponding to each piece of unshared data, which may be manual annotation, regular annotation, or cluster annotation. The annotation methods are all prior arts, and are not described in detail here. It is to be noted that the device fault prediction method according to the embodiment of the present invention may also be used for predicting the remaining service life of the device. Specifically, the device fault label is replaced with the remaining service life of the device.

In one embodiment, the step of establishing a federated learning model according to the unshared data, the weight of the unshared data and a device fault label corresponding to the unshared data includes: determining a detection point local model according to the unshared data, the weight of the unshared data and the device fault label corresponding to the unshared data; and establishing the federated learning model according to at least two detection point local models.

Specifically, the detection point local model is determined according to the unshared data, the weight of the unshared data and the device fault label corresponding to the unshared data, and then at least two detection point local models are integrated to establish the federated learning model.

Specifically, unshared data of detection points can be migrated to the target device according to the unshared data and weights of the unshared data, and model parameters are subsequently adjusted according to weights of a plurality of pieces of unshared data, so that the adjusted model parameters can reflect a relationship between the feature data and the device faults of the target device, which does not involve the sharing of the detection point data and the feature data of the target device, thereby ensuring the data security.

In one embodiment of the present invention, the step of establishing the federated learning model according to at least two detection point local models includes: repeatedly iterating the at least two detection point local models based on a combined learning algorithm, and establishing the federated learning model based on at least two iterated detection point local models.

Specifically, the combined learning algorithm means sending detection point local model parameters in each detection point local model to the detection point of the target device, and the detection point of the target device averages or weighted-averages the detection point local model parameters to obtain federated learning model parameters, and the detection point local models are updated and iterated based on federated learning parameters.

Specifically, model parameters of the detection point local model of each detection point are sent to the detection point of the target device, the detection point of the target device integrates the model parameters of the detection point local model from each detection point to obtain federated learning model parameters, and the integrated federated learning model parameters are distributed to the detection point local model of each detection point, then local training is performed according to unshared data of each detection point and the integrated combined model parameters to obtain updated model parameters, and the updated model parameters are sent to the detection point of the target device. Repeated iteration is performed according to the above method, until a number of iterations meets a preset number, or a model error of the iterated detection point local model meets a preset value. The iterated detection point local model parameters are integrated to obtain the federated learning model parameters, so as to obtain the federated learning model. The model parameters of each detection point local model may be integrated by average or weighted average, which is not limited in the embodiment of the present invention.

Specifically, the detection point local model may be a neural network model or a regression model, which is specifically determined according to an actual requirement.

Specifically, the detection point local model may be iterated in the following manner.

A1: Model training is performed according to a plurality of pieces of unshared data, a device fault label corresponding to each piece of unshared data and a weight corresponding to each piece of unshared data, to determine the detection point local model.

A2: It is determined whether a model error of the detection point local model meets an iteration condition, if yes, the detection point local model is determined as a final model and sent to the target device, and if no, A3 is performed.

A3: Model parameters of the detection point local model are sent to a detection point of the target device.

A4: Integrated model parameters sent by the detection point of the target device are received, the integrated model parameters are adjusted according to the plurality of pieces of unshared data, the device fault labels corresponding to the plurality of pieces of unshared data and the weights corresponding to the plurality of pieces of unshared data, the adjusted model parameters are replaced with the model parameters of the detection point local model, and A2 is performed.

In step S105, the federated learning model is established according to at least two detection point local models.

Specifically, current feature data of the target device is collected, and the current feature data is substituted into the federated learning model. That is, it is determined whether the target device is faulty.

In order to better understand data processing between a detection point of the target device and detection points of unshared data, for example, it is assumed that detection points of 3 pieces of unshared data are A, B and C and a node of the target device is D. Taking A as an example, A determines a probability distribution model of unshared data according to a Gaussian mixture model and receives a probability distribution model of feature data sent from D, so as to determine weights corresponding to the unshared data. B and C obtain a weight corresponding to each piece of unshared data according to a processing process similar to A.

Then, A, B and C perform model training according to each piece of unshared data, a device fault label corresponding to the unshared data and the weight corresponding to each piece of unshared data, to obtain the detection point local model. Then, D performs federated learning on the detection point local models sent from A, B and C, to obtain a federated learning model of the target device.

As can be seen from the above technical solution, the embodiment of the present invention has at least the following beneficial effects. Weights of unshared data are determined through the probability distribution model of the feature data and the probability distribution model of the detection point data, to obtain a detection point local model of the target device, data association between detection points of the unshared data and the target device is established, and the unshared data is migrated to the target device. At the same time, the federated learning model is established based on the unshared data, the device fault of the target device is predicted using the federated learning model, without sharing device feature data between non-target devices and the target device, thereby ensuring data security.

FIG. 1 shows only a basic embodiment of the method according to the present invention. Other preferred embodiments of the method can also be obtained by certain optimization and expansion on the basis of the method.

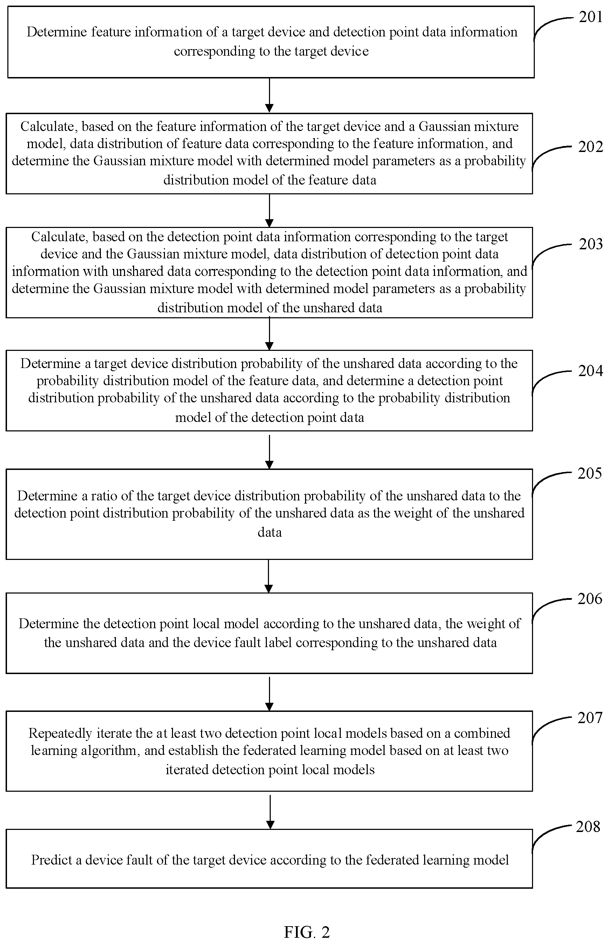

For a more clear illustration of the technical solution of the present invention, please refer to FIG. 2. FIG. 2 is a schematic flowchart of another device fault prediction method according to an embodiment of the present invention. Based on the above embodiments, this embodiment is further described in combination with specific application scenarios. As shown in FIG. 2, the device fault prediction method may specifically include the following steps.

In step 201, feature information of a target device and detection point data information corresponding to the target device are determined.

Specifically, assuming that the detection point corresponding to the target device in the Internet of Things is n and N detection points of unshared data are provided. Corresponding detection points in the Internet of Things are n1, n2, ..., and nN respectively, n1, n2, ..., and nN can acquire the unshared data respectively, and n can acquire all feature data of the target device. It is to be noted that n1, n2, ..., and nN obtain a detection point local model in similar processes, and only the processing process of n1 is described below.

In step 202, based on the feature information of the target device and a Gaussian mixture model, data distribution of feature data corresponding to the feature information is calculated, and the Gaussian mixture model with determined model parameters is determined as a probability distribution model of the feature data.

According to the Gaussian mixture model, n substitutes the feature data into the Gaussian mixture model to calculate the feature data, so as to obtain probability distribution models of the feature data, and sends the probability distribution models of the feature data to n1, n2, ..., and nN respectively.

n1, n2, ..., and nN obtain probability distribution models of the unshared data in similar processes, and only the processing process of n1 is described below.

In step 203, based on the detection point data information corresponding to the target device and the Gaussian mixture model, data distribution of detection point data information with unshared data corresponding to the detection point data information is calculated, and the Gaussian mixture model with determined model parameters is determined as a probability distribution model of the unshared data.

n1 acquires a plurality of pieces of unshared data, and substitutes the unshared data into the Gaussian mixture model for calculation, to obtain probability distribution models of the unshared data of n1.

In step 204, a target device distribution probability of the unshared data is determined according to the probability distribution model of the feature data, and a detection point distribution probability of the unshared data is determined according to the probability distribution model of the detection point data.

n1 receives the probability distribution model corresponding to the feature data, and substitutes the obtained unshared data into the probability distribution model of the feature data for calculation, to obtain the target device distribution probability of the unshared data.

n1 substitutes the unshared data into the probability distribution model of the unshared data for calculation, to obtain the detection point distribution probability of the unshared data.

In step 205, a ratio of the target device distribution probability of the unshared data to the detection point distribution probability of the unshared data is determined as the weight of the unshared data.

n1 determines a probability ratio of a distribution probability of the unshared data with respect to the target device to a distribution probability with respect to a detection point of the unshared data as the weight of the unshared data. The weight of each piece of unshared data is obtained based on the same method. In this way, data association between the target device and the detection point of the unshared data can be established.

In step 206, the detection point local model is determined according to the unshared data, the weight of the unshared data and the device fault label corresponding to the unshared data.

n1 performs model training according to the unshared data, the weight of the unshared data and the device fault label corresponding to the unshared data, to determine the detection point local model of the target device. n2, ..., and nN determine the detection point local model of the target device according to a method similar to n1 respectively.

In step 207, the at least two detection point local models are repeatedly iterated based on a combined learning algorithm, and the federated learning model is established based on at least two iterated detection point local models.

n as well as n1, n2, ..., and nN use the combined learning algorithm, the detection point local models trained by n1, n2, ..., and nN respectively are iterated and then sent to n, n performs model average on the iterated detection point local models trained by n1, n2, ..., and nN respectively to establish the federated learning model of the target device.

In step 208, a device fault of the target device is predict according to the federated learning model.

n predicts a device fault of the target device according to the federated learning model.

As can be seen from the above technical solution, this embodiment has the following beneficial effects. Weights of unshared data are obtained through a ratio of the probability distribution model of the unshared data and the probability distribution model of the feature data, data association between detection points of the unshared data and the target device is established, and the unshared data is migrated to the target device. The federated learning model of the target device is established through the target device and the detection points of the unshared data in the Internet of Things, so that no feature data is shared between the target device and the detection points of the unshared data, thereby ensuring data security.

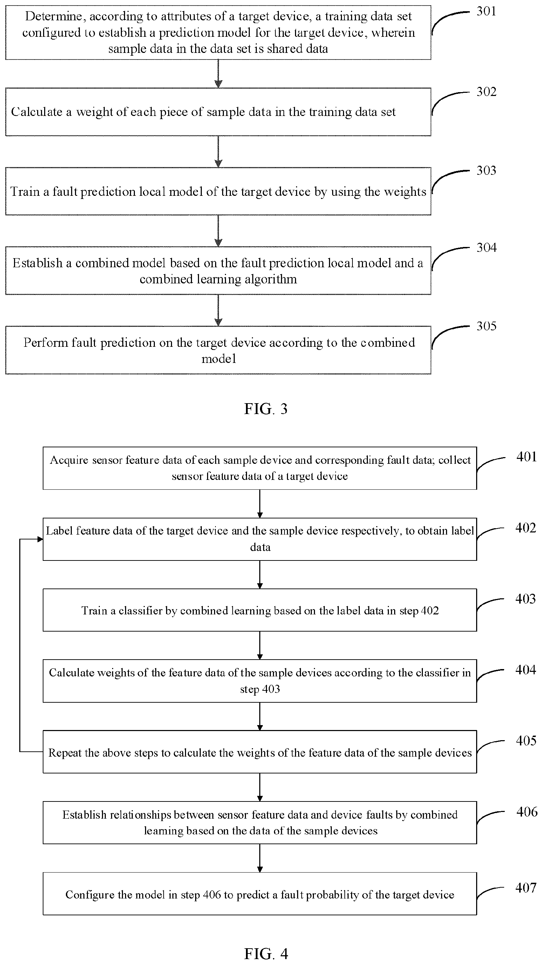

FIG. 3 is a schematic flowchart of a device fault prediction method according to an embodiment of the present invention. As shown in FIG. 3, the device fault prediction method includes the following steps.

In step 301, according to attributes of a target device, a training data set configured to establish a prediction model for the target device is acquired, wherein sample data in the data set is shared data.

In step 302, a weight of each piece of sample data in the training data set is calculated.

In step 303, a fault prediction local model of the target device is trained by using the weights.

In step 304, a combined model is established based on the fault prediction local model and a combined learning algorithm.

In step 305, fault prediction is performed on the target device according to the combined model.

In this embodiment, the sample data in the training data set includes feature data of the target device, feature data of sample devices and fault data of the sample devices; and the sample devices are devices related to or similar to the target device. The fault prediction local model and the combined model are relationships between device feature data and device faults. Data of different devices is distributed in different nodes of the Internet of Things, and sharing data to train models may cause data security problems. In this embodiment, a combined-learning-based sample migration method is used for predictive device maintenance, which may perform combined learning on data collected from a plurality of devices and migrate the data to the target device to train predictive maintenance models for the target device, realizing multi-party combined learning, ensuring that data of all parties does not go out locally, and preventing data security problems caused by direct data sharing.

In one embodiment of the present invention, the step of calculating a weight of each piece of sample data in the training data set includes: for each of the sample devices, differentiating the feature data of sample devices from the feature data of the target device; training a classification model according to the feature data after differentiation; and calculating the weight of each piece of feature data of the sample devices according to the trained classification model.

The sample device and the to-be-predicted device may be distributed to any node in the Internet of Things respectively, and in order to ensure data privacy, data of the sample device and the to-be-predicted device cannot be shared. Therefore, a combined-learning-based classification model can be used. For example, a combined-learning-based XGBoost model is used in this embodiment.

In one embodiment of the present invention, the step of calculating a weight of each piece of sample data in the training data set includes: for each of the sample devices, marking the feature data of the sample devices as first data, and marking the feature data of the target device as second data; and training the classification model according to the first data and the second data, the classification model being a combined-learning-based classification model; in the step of calculating the weight of each piece of feature data of the sample devices according to the trained classification model, a calculation formula of the weight is:

$$\omega_i = \frac{P_{2i}}{P_{1i}}$$

where $\omega_i$ denotes a weight of an $i^{th}$ piece of data in the first data, $P_{1i}$ denotes a probability of the $i^{th}$ piece of data belonging to the sample device, and $P_{2i}$ denotes a probability of the $i^{th}$ piece of data belonging to the target device.

In one embodiment of the present invention, the step of training a fault prediction local model of the target device by using the weights includes: training, according to the feature data of each of the sample devices, the weight of each piece of feature data of the sample device and the fault data of each of the sample devices, the fault prediction local model of the target device on training data sets with weights of the sample devices respectively by using a neural network.

In one embodiment of the present invention, the step of establishing a combined model based on the fault prediction local model and a combined learning algorithm includes: performing repeated iteration by using the combined learning algorithm according to the fault prediction local mode, to obtain a combined model of the sample devices on the training data sets with respect to the target device.

In one embodiment of the present invention, the target device and the sample devices are edge nodes in an Internet of Things, the feature data of the target device is not exposed to other sample devices, and the feature data and the fault data of each of the sample devices are not exposed to other sample devices and the target device.

FIG. 4 is a schematic flowchart of another device fault prediction method according to an embodiment of the present invention. As shown in FIG. 4, the device fault prediction method includes the following steps.

In step 401, sensor feature data of each sample device and corresponding fault data are acquired; sensor feature data of a target device is collected.

In step 402, feature data of the target device and the sample device is labeled respectively, to obtain label data.

In step 403, a classifier (binary) is trained by combined learning based on the label data in step 402.

In step 404, weights of the feature data of the sample devices are calculated according to the classifier in step 403.

In step 405, the above steps are repeated to calculate the weights of the feature data of the sample devices.

In step 406, relationships between sensor feature data and device faults are established by combined learning based on the data of the sample devices.

In step 407, the model in step 406 is configured to predict a fault probability of the target device.

Assuming that feature data of detection points of devices A, B and C and corresponding fault labels are available, that is, all feature data and fault data (label data) of the devices A, B, and C are available. At the same time, feature data of same detection points of the device D is also available, that is, all feature data of the device D is available, but fault data is unavailable. A fault probability of the device D is required to be predicted according to the feature data.

An objective is to use the feature data and the fault data of the devices A, B, and C and the feature data of the device D to learn a probability model for predicting faults of the device D, which is configured for fault prediction on the device D.

It is to be noted that, in this process, assuming that A, B, C and D are all edge nodes in the Internet of Things and have requirements for data privacy and security, and their feature data and fault data cannot be exposed to the outside during training.

In this embodiment, the device fault prediction method includes the following steps.

  1. A training data set is collected. The training data set includes all feature data and fault data of the devices A, B and C and feature data of the device D.
  2. Weights of the feature data of the devices A, B and C are calculated. Taking the device A as an example below, B and C are the same therewith, calculation steps are as follows.

    a) The feature data of the device A and the device D is labeled. Assuming that the label of the device A is 0 and the label of the device D is 1.
    b) A classifier (binary) is trained based on the label data of the device A and the device D (in this example, a combined-learning-based XGBoost model is used, which is not limited to XGBoost in practice, and any combined-learning-based probability classification model may be used).
    c) For each piece of data x in the device A, a probability PA(x) of the data x belonging to the device A and a probability PD(x) of the data x belonging to the device D are calculated according to the trained binary classifier. A weight of the data x is calculated, $\omega(x)=PD(x)/PA(x)$.

  3. Model training is performed.

    a) The feature data and the fault data of the devices A, B and C and the weight corresponding to each piece of feature data are obtained from the above steps.
    b) A local model is trained. A fault prediction local model of the device D is trained on data sets with weights of the devices A, B and C respectively by using a neural network or a correlation regression algorithm (the specific training process is a standard process, and is not described in detail).
    c) A combined model is calculated according to the fault prediction local model of the device D trained on the data sets of the devices A, B and C. Repeated iteration is performed using model average (a combined learning algorithm) to calculate a combined model about fault prediction of the device D on the data sets of the devices A, B and C, that is, a fault prediction model. In this embodiment, a number of repeated iterations is determined by model preset accuracy and a preset iteration number.

  4. The obtained combined model is configured for fault prediction of the device D.

In this embodiment, it is temporarily assumed that the devices A, B and C participate in the combined training. In practice, a number of combined devices is not limited.

It is to be noted that the device fault data mentioned in the present invention may also be replaced with the remaining service life of the device, so as to predict the remaining service life of the device.

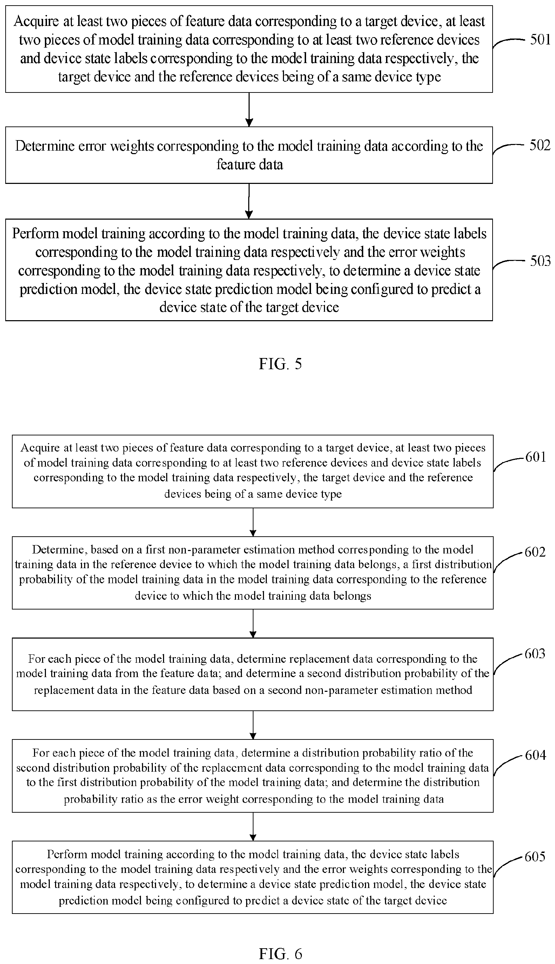

FIG. 5 is a schematic flowchart of a device state prediction method according to an embodiment of the present invention. As shown in FIG. 5, the device state prediction method includes the following steps.

In step 501, at least two pieces of feature data corresponding to a target device, at least two pieces of model training data corresponding to at least two reference devices and device state labels corresponding to the model training data respectively are acquired, the target device and the reference devices being of a same device type.

Specifically, operation data of the reference devices may be acquired according to sensors mounted on the reference devices connected to the network, and a plurality of pieces of model training data corresponding to the reference devices are determined according to the operation data of the reference devices. It is to be noted that it is a prior art to acquire the model training data based on data collected by the sensors, which is not described in detail in this embodiment.

Specifically, operation data of the reference devices may be acquired according to a sensor mounted on the target device connected to the network, and a plurality of pieces of model training data corresponding to the target device are determined according to the operation data of the target device. It is to be noted that it is a prior art to acquire the model training data based on data collected by the sensors, which is not described in detail in this embodiment.

Specifically, the model training data includes several features and each feature corresponds to one or more feature values in the reference devices. One feature value is preferred. The several features are influencing factors that affect the device state. Several features corresponding to the model training data and the feature data are the same, and the feature values corresponding to the features may be different. Here, the model training data corresponds to one device state label. It is to be noted that the embodiment of the present invention is not intended to limit a number of the reference devices, which is specifically determined according to actual scenarios.

In one embodiment, the device state label includes, but is not limited to, device fault information or the remaining service life of the device. It is to be noted that the embodiment of the present invention is not intended to limit a method for acquiring the device state label corresponding to each piece of model training data, which may be manual annotation, regular annotation, or cluster annotation. The annotation methods are all prior arts, and are not described in detail here.

It is to be noted that the reference devices and the target device are of a same device type, so as to ensure the value of data association between the reference devices and the target device, thereby ensuring the reference value of a device state prediction model determined later. For example, both the reference devices and the target device are gas boilers.

It is also to be noted that the feature data of the target device has no device state label, so the target device cannot use its own data to complete model training. Therefore, a device state prediction model corresponding thereto may be obtained by means of the model training data of the reference devices.

In step 502, error weights corresponding to the model training data are determined according to the feature data.

In one embodiment, the error weights corresponding to the model training data may be specifically determined through the following method.

determining replacement data corresponding to the model training data from the feature data; determining first distribution information of the model training data in the model training data corresponding to the reference device to which the model training data belongs and second distribution information of the replacement data in the feature data; and determining weight errors corresponding to the model training data according to the first distribution information and the second distribution information.

In order to determine the error weights corresponding to the model training data of the reference device and understand a data relationship between parameter devices and the target device, replacement data corresponding to the model training data is required to be found from a plurality of pieces of feature data of the target device. Here, the replacement data is preferably data in the plurality of pieces of feature data the same as the model training data. If the plurality of pieces of feature data does not include the data the same as the model training data, the replacement data may be data in the plurality of pieces of feature data most similar to the model training data. In one possible case, when the plurality of pieces of feature data includes 2 or more than 2 pieces of feature data that may replace the model training data, one piece of feature data that may replace the model training data may be randomly selected as the replacement data.

Then, the first distribution information of the model training data in the model training data corresponding to the reference device to which the model training data belongs is determined. Here, the first distribution information indicates distribution of the model training data in all the model training data corresponding to the reference device to which the model training data belongs. The first distribution information may be a distribution probability or an occurrence frequency, which is not specifically limited herein.

Then, the second distribution information of the replacement data in the feature data is determined. Here, the second distribution information indicates distribution of the replacement data in all the feature data of the target device. The second distribution information may be a distribution probability or an occurrence frequency, which is not specifically limited herein. It is to be noted that contents included in the first distribution information and the second distribution information should be unified. For example, the first distribution information and the second distribution information may both include the distribution probability and the occurrence frequency, which is not specifically limited herein.

It is to be noted that this embodiment is not intended to limit the method for determining distribution information, and the method may be any method for determining data distribution in the prior art, for example, a parameter estimation method, a non-parameter estimation method, or a semi-parameter estimation method.

In one embodiment, the first distribution information is a first distribution probability, and the second distribution information is a second distribution probability. The first distribution probability and the second distribution probability may be specifically determined in the following manner.

A first distribution probability of the model training data in the model training data corresponding to the reference device to which the model training data belongs is determined based on a first non-parameter estimation method corresponding to the reference device to which the model training data belongs. A second distribution probability of the feature data in the feature data is determined based on a second non-parameter estimation method.

The non-parameter estimation method is not limited by population distribution, a specific form of the population distribution is not assumed, required information is obtained from data or samples, and a structure of distribution is obtained by estimation, which plays an extremely important role in reducing deviation, improving prediction accuracy and understanding a dynamic structure of the data. In particular, when the data distribution is very irregular, the non-parameter estimation method is more accurate than the parameter estimation method. Therefore, the non-parameter estimation method is adopted in this embodiment to determine the distribution probability.

There may be differences in data distribution corresponding to the reference devices and the target device. Therefore, in order to ensure the accuracy of the obtained probability distribution, probability density functions of the model training data corresponding to the reference devices are determined by a first non-parameter estimation method, and first distribution probabilities of the model training data corresponding to the reference devices are determined based on the probability density functions. Probability density functions of the feature data corresponding to the target device are determined by a second non-parameter estimation method, and second distribution probabilities of the feature data corresponding to the target device are determined based on the probability density functions.

Data volumes and data distribution of the devices may vary. The accuracy of the estimated data distribution may be reduced if a same non-parameter estimation method is adopted. Therefore, there is a need to select an appropriate non-parameter estimation method for data distribution estimation based on the data volumes and the data distribution of each reference device and the target device. When the data amount of each piece of model training data corresponding to each reference device differs slightly from the data amount of each piece of feature data corresponding to the target device, the first non-parameter estimation method corresponding to each reference device is the same as the second non-parameter estimation method corresponding to the target device. In one possible case, both the first non-parameter estimation method and the second non-parameter estimation method are kernel density estimation methods.

In one embodiment, when the first distribution information is a first distribution probability and the second distribution information is a second distribution probability, the error weight corresponding to the model training data may be specifically determined in the following manner.

For each piece of the model training data, a distribution probability ratio of the second distribution probability of the replacement data corresponding to the model training data to the first distribution probability of the model training data is determined, and the distribution probability ratio is determined as the error weight corresponding to the model training data.

In one embodiment, when the first distribution information is a first occurrence frequency and the second distribution information is a second occurrence frequency, the error weight corresponding to the model training data may be specifically determined in the following manner.

For each piece of the model training data, an occurrence frequency ratio of the occurrence frequency probability of the replacement data corresponding to the model training data to the first occurrence frequency of the model training data is determined, and the occurrence frequency ratio is determined as the error weight corresponding to the model training data.

In step 503, model training is performed according to the model training data, the device state labels corresponding to the model training data respectively and the error weights corresponding to the model training data respectively, to determine a device state prediction model, the device state prediction model being configured to predict a device state of the target device.

In one embodiment, the device state prediction model may be a neural network model or a regression model, which is not limited herein and is specifically determined according to an actual situation.

In one embodiment, the device state prediction method according to this embodiment is applied to edge servers or local servers corresponding to the target device, thereby reducing computing load of a cloud server.

Specifically, the device state prediction model takes a plurality of pieces of model training data and a device state label corresponding to each piece of model training data as training data, and model parameters of the device state prediction model are adjusted through the error weight corresponding to each piece of model training data, so that the adjusted model parameters can reflect an association between the feature data and device states of the target device, thereby ensuring model accuracy of the device state prediction model.

In one embodiment, the device state prediction model may be determined in the following manner.

A1. Firsts error corresponding to the model training data are determined according to a prediction result of substituting the model training data into a to-be-predicted model and the device state labels corresponding to the model training data, and second errors corresponding to the model training data are determined according to the first errors corresponding to the model training data and the error weights.

A2. It is determined whether a number of iterations is met or the second errors corresponding to the model training data meet a preset condition, if yes, the to-be-predicted model is determined as a device state prediction model, and if no, A3 is performed.

A3. Model parameters in the to-be-predicted model are adjusted according to the second errors corresponding to the model training data, to determine adjusted model parameters, replacing the model parameters in the to-be-predicted model with the adjusted model parameters, and A1 is performed.

Here, whether the second errors corresponding to the model training data meet a preset condition may be whether a mean value of the second errors corresponding to the model training data is less than a threshold, or whether a standard variance of the second errors corresponding to the model training data is less than a threshold, which is not specifically limited herein.

Specifically, the prediction result may be understood as device state information, and the first error is a degree of proximity between the prediction result and the device state label. For example, the prediction result may be Faulty or Non-faulty. When prediction result is Faulty and the device state label is also Faulty, the first error is 0. Otherwise, the first error is 1.

As can be seen from the above technical solution, this embodiment has the following beneficial effects. Error weights of a plurality of pieces of model training data corresponding to a plurality of reference devices respectively with respect to the target device are determined, so as to migrate the plurality of pieces of model training data corresponding to the plurality of reference devices respectively to the target device. Subsequently, model training is performed using the plurality of pieces of model training data corresponding to the plurality of reference devices respectively, the device state label corresponding to each piece of model training data and a weight error corresponding to each piece of model training data, to obtain a device state prediction model configured to predict a device state of the target device. The obtained device state prediction model has relatively high accuracy due to the comprehensive consideration of the error weight of model training data with respect to the target device. Subsequently, when the device state of the target device is predicted based on the device state prediction model, a more accurate device state of the target device can be obtained.

FIG. 5 shows only a basic embodiment of the method according to the present invention. Other preferred embodiments of the method can also be obtained by certain optimization and expansion on the basis of the method.

FIG. 6 is a schematic flowchart of another device state prediction method according to an embodiment of the present invention. Based on the above embodiments, this embodiment is further specifically described in combination with application scenarios. As shown in FIG. 6, the device state prediction method specifically includes the following steps.

In step 601, at least two pieces of feature data corresponding to a target device, at least two pieces of model training data corresponding to at least two reference devices and device state labels corresponding to the model training data respectively are acquired, the target device and the reference devices being of a same device type.

It is assumed that 3 reference devices are Boiler A, Boiler B and Boiler C respectively, and the target device is Boiler D. Boiler A, Boiler B and Boiler C correspond to N pieces of model training data respectively, each piece of model training data corresponds to a fault label, the fault label may be Faulty or Normal, Boiler D corresponds to n pieces of feature data, several features corresponding to the feature data and the model training date respectively are the same, but feature values corresponding to the features may vary.

In step 602, a first distribution probability of the model training data in the model training data corresponding to the reference device to which the model training data belongs is determined based on a first non-parameter estimation method corresponding to the model training data in the reference device to which the model training data belongs.

It is assumed that the first non-parameter estimation methods corresponding to Boiler A, Boiler B and Boiler C respectively are all kernel density estimation methods. For Boiler A, it is determined, based on the kernel density estimation method, that Boiler A corresponds to probability density distribution functions of the N pieces of model training data. For each piece of model training data in Boiler A, a first distribution probability $P1$ of the model training data in all the model training data of Boiler A is determined based on Boiler A corresponding to probability density distribution functions of the N pieces of model training data. A first distribution probability $P1$ of each piece of model training data corresponding to Boiler B and Boiler C respectively is calculated with a same method as Boiler A, which is not described in detail here.

In step 603, for each piece of the model training data, replacement data corresponding to the model training data is determined from the feature data; and a second distribution probability of the replacement data in the feature data is determined based on a second non-parameter estimation method.

For each piece of the model training data corresponding to Boiler A, Boiler B and Boiler C respectively, replacement data corresponding to the model training data is determined from the feature data. Probability density distribution functions of n pieces of feature data corresponding to Boiler D are determined based on a kernel density estimation method. For each piece of replacement data, a second distribution probability P2 of the replacement data in all the feature data of Boiler D is determined based on the probability density distribution functions of n pieces of feature data corresponding to Boiler D.

In step 604, for each piece of the model training data, a distribution probability ratio of the second distribution probability of the replacement data corresponding to the model training data to the first distribution probability of the model training data is determined; and the distribution probability ratio is determined as the error weight corresponding to the model training data.

For each piece of model training data, a ratio of the second distribution probability P2 of the replacement data corresponding to the model training data to the first distribution probability P1 of the model training data is P2/P1, and P2/P1 is determined as the error weight W corresponding to the model training data.

In step 605, model training is performed according to the model training data, the device state labels corresponding to the model training data respectively and the error weights corresponding to the model training data respectively, to determine a device state prediction model, the device state prediction model being configured to predict a device state of the target device.

Specifically, the device state prediction model is trained according to the N pieces of model training data corresponding to Boiler A, Boiler B and Boiler C respectively and the fault label corresponding to each piece of model training data, and model parameters are adjusted based on the error weight W corresponding to each piece of model training data, to finally obtain the device state prediction model.

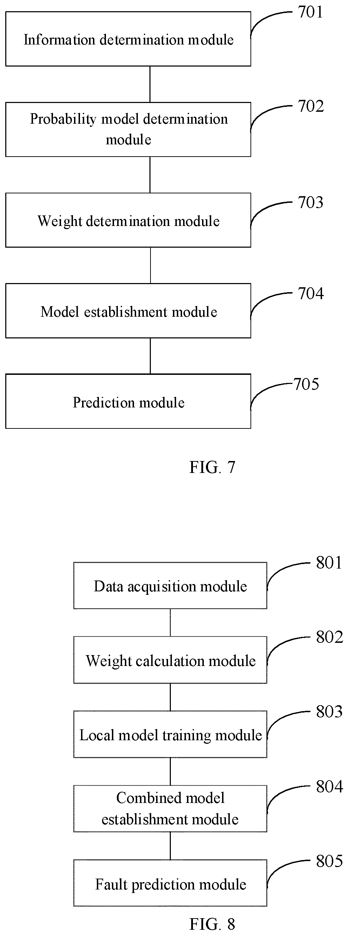

Based on the same idea as the device fault prediction method according to the method embodiment of the present invention, refer to FIG. 7. FIG. 7 is a schematic structural diagram of a device fault prediction apparatus according to an embodiment of the present invention. As shown in FIG. 7, the device fault prediction apparatus includes:

an information determination module 701 configured to determine feature information of a target device and detection point data information corresponding to the target device;

a probability model determination module 702 configured to determine, based on the feature information of the target device and the detection point data information corresponding to the target device, a probability distribution model of feature data of the target device and a probability distribution model of detection point data with unshared data;

a weight determination module 703 configured to determine a weight of the unshared data according to the probability distribution model of the feature data and the probability distribution model of the detection point data;

a model establishment module 704 configured to establish a federated learning model according to the unshared data, the weight of the unshared data and a device fault label corresponding to the unshared data; and

a prediction module 705 configured to predict a device fault of the target device according to the federated learning model.

In one embodiment of the present invention, the probability model determination module 702 includes: a data determination unit, a first probability distribution model determination unit and a second probability distribution model determination unit. The data determination unit is configured to determine, based on the feature information of the target device and the detection point data information corresponding to the target device, the feature data of the target device and the detection point data with the unshared data. The first probability distribution model determination unit is configured to calculate data distribution of the feature data according to a feature data parameter model, and determine the feature data parameter model with determined parameters as the probability distribution model of the feature data. The second probability distribution model determination unit is configured to calculate data distribution of the detection point data according to a detection point data parameter model, and determine the detection point data parameter model with determined parameters as the probability distribution model of the detection point data.

In this embodiment, the feature data parameter model and/or the detection point data parameter model include/includes a Gaussian mixture model.

In one embodiment of the present invention, the weight determination module 703 includes: a first distribution probability determination unit, a second distribution probability determination unit and a weight determination unit. The first distribution probability determination unit is configured to determine a target device distribution probability of the unshared data according to the probability distribution model of the feature data. The second distribution probability determination unit is configured to determine a detection point distribution probability of the unshared data according to the probability distribution model of the detection point data. The weight determination unit is configured to determine a ratio of the target device distribution probability of the unshared data to the detection point distribution probability of the unshared data as the weight of the unshared data.

In one embodiment of the present invention, the model establishment module 704 includes: a local model determination unit and a model establishment unit. The local model determination unit is configured to a detection point local model according to the unshared data, the weight of the unshared data and the device fault label corresponding to the unshared data. The model establishment unit is configured to establish the federated learning model according to at least two detection point local models.

In one embodiment of the present invention, the model establishment unit is configured to repeatedly iterate the at least two detection point local models based on a combined learning algorithm, and establish the federated learning model based on at least two iterated detection point local models.

In one embodiment of the present invention, the detection point local model includes a neural network model or a regression model.

FIG. 8 is a schematic structural diagram of a device fault prediction apparatus according to an embodiment of the present invention. As shown in FIG. 8, the device fault prediction apparatus includes: a data acquisition module 801, a weight calculation module 802, a local model training module 803, a combined model establishment module 804 and a fault prediction module 805.

The data acquisition module 801 is configured to acquire, according to attributes of a target device, a training data set configured to establish a prediction model for the target device, wherein sample data in the data set is shared data.

The weight calculation module 802 is configured to calculate a weight of each piece of sample data in the training data set.

The local model training module 803 is configured to train a fault prediction local model of the target device by using the weights.

The combined model establishment module 804 is configured to establish a combined model based on the fault prediction local model and a combined learning algorithm.

The fault prediction module 805 is configured to perform fault prediction on the target device according to the combined model.

In one embodiment of the present invention, the sample data in the training data set includes feature data of the target device, feature data of sample devices and fault data of the sample devices; and the sample devices are devices related to or similar to the target device.

In one embodiment of the present invention, the weight calculation module includes a data marking unit, a data classification unit and a data calculation unit. For each of the sample devices, the data marking unit is configured to differentiate the feature data of sample devices from the feature data of the target device. The data classification unit is configured to train a classification model according to the feature data after differentiation. The data calculation unit is configured to calculate the weight of each piece of feature data of the sample devices according to the trained classification model.

In one embodiment of the present invention, for each of the sample devices, the data marking unit is specifically configured to mark the feature data of the sample devices as first data, and mark the feature data of the target device as second data. The data classification unit is specifically configured to train the classification model according to the first data and the second data, the classification model being a combined-learning-based classification model. The data calculation unit is specifically configured to calculate the weight of each piece of feature data of the sample devices according to the trained classification model, and a calculation formula of the weight is:

$$\omega_i = \frac{P_{2i}}{P_{1i}}$$

where $\omega_i$ denotes a weight of an $i^{th}$ piece of data in the first data, $P_{1i}$ denotes a probability of the $i^{th}$ piece of data belonging to the sample device, and $P_{2i}$ denotes a probability of the $i^{th}$ piece of data belonging to the target device.

In one embodiment of the present invention, the local model training module is specifically configured to train, according to the feature data of each of the sample devices, the weight of each piece of feature data of the sample device and the fault data of each of the sample devices, the fault prediction local model of the target device on training data sets with weights of the sample devices respectively by using a neural network.

In one embodiment of the present invention, the combined model establishment module is specifically configured to perform repeated iteration by using the combined learning algorithm according to the fault prediction local mode, to obtain a combined model of the sample devices on the training data sets with respect to the target device.

In one embodiment of the present invention, the target device and the sample devices are edge nodes in an Internet of Things, the feature data of the target device is not exposed to other sample devices, and the feature data and the fault data of each of the sample devices are not exposed to other sample devices and the target device.

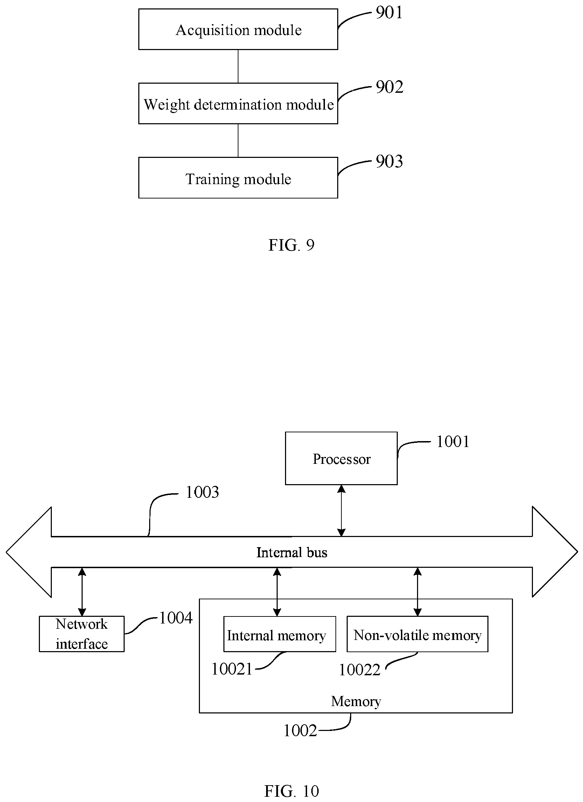

Based on the same idea as the method embodiment of the present invention, refer to FIG. 9. FIG. 9 is a schematic structural diagram of a device state prediction apparatus according to an embodiment of the present invention. As shown in FIG. 9, the device state prediction apparatus includes:

an acquisition module 901 configured to acquire at least two pieces of feature data corresponding to a target device, at least two pieces of model training data corresponding to at least two reference devices and device state labels corresponding to the model training data respectively, the target device and the reference devices being of a same device type;

a weight determination module 902 configured to determine error weights corresponding to the model training data according to the feature data; and

a training module 903 configured to perform model training according to the model training data, the device state labels corresponding to the model training data respectively and the error weights corresponding to the model training data respectively, to determine a device state prediction model, the device state prediction model being configured to predict a device state of the target device.

In one embodiment, the weight determination module 902 includes a replacement data determination unit, a distribution information determination unit and an importance determination unit. The replacement data determination unit is configured to determine replacement data corresponding to the model training data from the feature data. The distribution information determination unit is configured to determine first distribution information of the model training data in the model training data corresponding to the reference device to which the model training data belongs and second distribution information of the replacement data in the feature data. The importance determination unit is configured to determine the error weights corresponding to the model training data according to the first distribution information of the model training data and the second distribution information of the replacement data corresponding to the model training data.

In one embodiment, the distribution information determination unit includes: a first information determination subunit and a second information determination subunit. The first information determination subunit is configured to determine, based on a first non-parameter estimation method corresponding to the reference device to which the model training data belongs, a first distribution probability of the model training data in the model training data corresponding to the reference device to which the model training data belongs, and determine the first distribution probability as the first distribution information. The second information determination subunit is configured to determine a second distribution probability of the replacement data in the feature data based on a second non-parameter estimation method, and determine the second distribution probability as the second distribution information.

In one embodiment, the first non-parameter estimation method and the second non-parameter estimation method are kernel density estimation algorithms.

In one embodiment, the weight determination module 302 is configured to, for each piece of the model training data, determine a distribution probability ratio of the second distribution probability of the replacement data corresponding to the model training data to the first distribution probability of the model training data, and determine the distribution probability ratio as the error weight corresponding to the model training data.

In one embodiment, the method is applied to an edge server or a local server corresponding to the target device.

In one embodiment, the training module 903 includes: a training unit, a determination unit and an adjustment unit. The training unit is configured to determine first errors corresponding to the model training data according to a prediction result of substituting the model training data into a to-be-predicted model and the device state labels corresponding to the model training data, and determine second errors corresponding to the model training data according to the first errors corresponding to the model training data and the error weights. The determination unit is configured to determine whether a number of iterations is met or the second errors corresponding to the model training data meet a preset condition, if yes, determine the to-be-predicted model as a device state prediction model, and if no, trigger the adjustment unit. The adjustment unit is configured to adjust model parameters in the to-be-predicted model according to the second errors corresponding to the model training data, to determine adjusted model parameters, replace the model parameters in the to-be-predicted model with the adjusted model parameters, and trigger the training unit.

Information exchange, execution processes and other contents between modules and units in the apparatuses are based on the same idea as the method embodiments of the present invention, and the specific contents may be obtained with reference to the description in the method embodiments of the present invention, which are not described in detail herein.

FIG. 10 is a schematic structural diagram of an electronic device according to an embodiment of the present invention. At a hardware level, the electronic device includes a processor 1001 and a memory 1002 storing execution instructions, and optionally further includes an internal bus 1003 and a network interface 1004. The memory 1002 may include an internal memory 10021 such as a Random-Access Memory (RAM), or a Non-Volatile Memory 10022 such as at least one disk memory. The processor 1001, the network interface 1004, and the memory 1002 may be connected to one another via the internal bus 1003. The internal bus 1003 may be an Industry Standard Architecture (ISA) bus, a Peripheral Component Interconnect (PCI) bus, an Extended Industry Standard Architecture (EISA) bus or the like. The internal bus 1003 may be divided into an address bus, a data bus, a control bus, etc. To facilitate representation, only a two-way arrow is used in FIG. 10, but it does not mean that there is only one bus or one type of bus. Certainly, the electronic device may also include hardware required by other services. When the processor 1001 executes the execution instructions stored in the memory 1002, the processor 1001 performs the method in any embodiment of the present invention.

In one possible implementation, the processor reads the corresponding execution instructions from the non-volatile memory into the internal memory and then runs, or obtains the corresponding execution instructions from other devices to form a device fault prediction apparatus on a logical level. The processor executes the execution instructions stored in the memory, so as to perform the device fault prediction method according to any embodiment of the present invention through the executed execution instructions.

The processor may be an integrated circuit chip with signal processing capability. During the implementation, the steps of the method may be completed by an integrated logic circuit of the hardware in the processor or by instructions in the form of software. The processor may be a general-purpose processor, including a Central Processing Unit (CPU), a Network Processor (NP) or the like; or a Digital Signal Processor (DSP), an Application Specific Integrated Circuit (ASIC), a Field-Programmable Gate Array (FPGA) or other programmable logic devices, discrete gates or transistor logic devices, and discrete hardware components. The methods, the steps and the logical block diagrams disclosed in the embodiments of the present invention may be realized or performed. The general-purpose processor may be a microprocessor or the processor may be any conventional processor, etc.

An embodiment of the present invention further provides a computer-readable storage medium, including execution instructions. When a processor of an electronic device executes the execution instructions, the processor performs the method in any one of the embodiments of the present invention. The electronic device may be the electronic device shown in FIG. 10. The execution instructions are a computer program corresponding to the device fault prediction method.

Those skilled in the art should understand that the embodiments of the present invention may be provided as a method or a computer program product. Therefore, the present invention may take a form of hardware only embodiments, software only embodiments, or embodiments with a combination of software and hardware.

Multiple embodiments in the present invention are described progressively. Same and similar parts among the multiple embodiments may be referred to one another, and each embodiment focuses on differences from other embodiments. In particular, the apparatus embodiments are basically similar to the method embodiments, so the description thereof is relatively simple. Related parts may be obtained with reference to the corresponding description in the method embodiments.

It is to be further noted that the terms such as "comprise", "include" or other variants thereof are intended to cover a non-exclusive inclusion, for example, processes, methods, items or devices including a series of elements not only include such elements, but also include other elements not listed explicitly, or other elements inherent to these processes, methods, items or devices. In the absence of more limitations, elements defined by the statement "including a/an ..." do not exclude existence of other identical elements in the processes, methods, items or devices including the elements.

The above are only embodiments of the present invention and are not intended to limit the present invention. For those skilled in the art, the present invention may have various modifications and changes. Any modification, equivalent replacement, improvement or the like made within the spirit and principle of the present invention should fall within the scope of the claims of the present invention.

## Claims

1. A device fault prediction method, comprising:

   determining feature information of a target device and detection point data information corresponding to the target device;
   determining, based on the feature information of the target device and the detection point data information corresponding to the target device, a probability distribution model of feature data of the target device and a probability distribution model of detection point data with unshared data;
   determining a weight of the unshared data according to the probability distribution model of the feature data and the probability distribution model of the detection point data;
   establishing a federated learning model according to the unshared data, the weight of the unshared data and a device fault label corresponding to the unshared data; and
   predicting a device fault of the target device according to the federated learning model.

2. The method according to claim 1, wherein the step of determining a weight of the unshared data according to the probability distribution model of the feature data and the probability distribution model of the detection point data comprises:

   determining a target device distribution probability of the unshared data according to the probability distribution model of the feature data;
   determining a detection point distribution probability of the unshared data according to the probability distribution model of the detection point data; and
   determining a ratio of the target device distribution probability of the unshared data to the detection point distribution probability of the unshared data as the weight of the unshared data.

3. The method according to claim 1, wherein the step of determining, based on the feature information of the target device and the detection point data information corresponding to the target device, a probability distribution model of feature data of the target device and a probability distribution model of detection point data with unshared data comprises:

   determining, based on the feature information of the target device and the detection point data information corresponding to the target device, the feature data of the target device and the detection point data with the unshared data;
   calculating data distribution of the feature data according to a feature data parameter model, and determining the feature data parameter model with determined parameters as the probability distribution model of the feature data; and
   calculating data distribution of the detection point data according to a detection point data parameter model, and determining the detection point data parameter model with determined parameters as the probability distribution model of the detection point data.

4. The method according to claim 3, wherein the feature data parameter model and/or the detection point data parameter model comprise/comprises a Gaussian mixture model.

5. The method according to claim 1, wherein the step of establishing a federated learning model according to the unshared data, the weight of the unshared data and a device fault label corresponding to the unshared data comprises:

   determining a detection point local model according to the unshared data, the weight of the unshared data and the device fault label corresponding to the unshared data; and
   establishing the federated learning model according to at least two detection point local models.

6. The method according to claim 5, wherein the step of establishing the federated learning model according to at least two detection point local models comprises:
   repeatedly iterating the at least two detection point local models based on a combined learning algorithm, and establishing the federated learning model based on at least two iterated detection point local models.

7. The method according to claim 5, wherein the detection point local model comprises a neural network model or a regression model.

8. A device fault prediction method, comprising:

   acquiring, according to attributes of a target device, a training data set configured to establish a prediction model for the target device, wherein sample data in the data set is shared data;
   calculating a weight of each piece of sample data in the training data set;
   training a fault prediction local model of the target device by using the weights;
   establishing a combined model based on the fault prediction local model and a combined learning algorithm; and
   performing fault prediction on the target device according to the combined model.

9. The device fault prediction method according to claim 8, wherein the sample data in the training data set comprises feature data of the target device, feature data of sample devices and fault data of the sample devices; and the sample devices are devices related to or similar to the target device.

10. The device fault prediction method according to claim 9, wherein the step of calculating a weight of each piece of sample data in the training data set comprises: for each of the sample devices,

   differentiating the feature data of sample devices from the feature data of the target device;
   training a classification model according to the feature data after differentiation; and
   calculating the weight of each piece of feature data of the sample devices according to the trained classification model.

11. The device fault prediction method according to claim 10, wherein the step of calculating a weight of each piece of sample data in the training data set comprises: for each of the sample devices,

   marking the feature data of the sample devices as first data, and marking the feature data of the target device as second data; and
   training the classification model according to the first data and the second data, the classification model being a combined-learning-based classification model;
   in the step of calculating the weight of each piece of feature data of the sample devices according to the trained classification model, a calculation formula of the weight is:

$$\omega_i = \frac{P_{2i}}{P_{1i}}$$

where $\omega_i$ denotes a weight of an $i^{th}$ piece of data in the first data, $P_{1i}$ denotes a probability of the $i^{th}$ piece of data belonging to the sample device, and $P_{2i}$ denotes a probability of the $i^{th}$ piece of data belonging to the target device.

12. The device fault prediction method according to claim 9, wherein the step of training a fault prediction local model of the target device by using the weights comprises:
training, according to the feature data of each of the sample devices, the weight of each piece of feature data of the sample device and the fault data of each of the sample devices, the fault prediction local model of the target device on training data sets with weights of the sample devices respectively by using a neural network.

13. The device fault prediction method according to claim 12, wherein the step of establishing a combined model based on the fault prediction local model and a combined learning algorithm comprises:
performing repeated iteration by using the combined learning algorithm according to the fault prediction local mode, to obtain a combined model of the sample devices on the training data sets with respect to the target device.

14. The device fault prediction method according to claim 9, wherein the target device and the sample devices are edge nodes in an Internet of Things, the feature data of the target device is not exposed to other sample devices, and the feature data and the fault data of each of the sample devices are not exposed to other sample devices and the target device.

15. A device state prediction method, comprising:

acquiring at least two pieces of feature data corresponding to a target device, at least two pieces of model training data corresponding to at least two reference devices and device state labels corresponding to the model training data respectively, the target device and the reference devices being of a same device type;
determining error weights corresponding to the model training data according to the feature data; and
performing model training according to the model training data, the device state labels corresponding to the model training data respectively and the error weights corresponding to the model training data respectively, to determine a device state prediction model, the device state prediction model being configured to predict a device state of the target device.

16. The method according to claim 15, wherein the step of determining error weights corresponding to the model training data according to the feature data comprises:

determining replacement data corresponding to the model training data from the feature data;
determining first distribution information of the model training data in the model training data corresponding to the reference device to which the model training data belongs and second distribution information of the replacement data in the feature data; and
determining the error weights corresponding to the model training data according to the first distribution information of the model training data and the second distribution information of the replacement data corresponding to the model training data.

17. The method according to claim 16, wherein the step of determining first distribution information of the model training data in the model training data corresponding to the reference device to which the model training data belongs and second distribution information of the replacement data in the feature data comprises:

determining, based on a first non-parameter estimation method corresponding to the reference device to which the model training data belongs, a first distribution probability of the model training data in the model training data corresponding to the reference device to which the model training data belongs, and determining the first distribution probability as the first distribution information; and
determining a second distribution probability of the replacement data in the feature data based on a second non-parameter estimation method, and determining the second distribution probability as the second distribution information.

18. The method according to claim 17, wherein the first non-parameter estimation method and the second non-parameter estimation method are kernel density estimation algorithms.

19. The method according to claim 17, wherein the step of determining the error weights corresponding to the model training data according to the first distribution information of the model training data and the second distribution information of the replacement data corresponding to the model training data comprises:

for each piece of the model training data, determining a distribution probability ratio of the second distribution probability of the replacement data corresponding to the model training data to the first distribution probability of the model training data, and determining the distribution probability ratio as the error weight corresponding to the model training data.

20. The method according to claim 15, wherein the method is applied to an edge server or a local server corresponding to the target device.

21. The method according to claim 15, wherein the step of performing model training according to the model training data, the device state labels corresponding to the model training data respectively and the error weights corresponding to the model training data respectively, to determine a device state prediction model comprises:

A1. determining first errors corresponding to the model training data according to a prediction result of substituting the model training data into a to-be-predicted model and the device state labels corresponding to the model training data, and determining second errors corresponding to the model training data according to the first errors corresponding to the model training data and the error weights;

A2. determining whether a number of iterations is met or the second errors corresponding to the model training data meet a preset condition, if yes, determining the to-be-predicted model as a device state prediction model, and if no, performing A3; and

A3. adjusting model parameters in the to-be-predicted model according to the second errors corresponding to the model training data, to determine adjusted model parameters, replacing the model parameters in the to-be-predicted model with the adjusted model parameters, and performing A1.

22. A device fault prediction apparatus, comprising:

an information determination module configured to determine feature information of a target device and detection point data information corresponding to the target device;

a probability model determination module configured to determine, based on the feature information of the target device and the detection point data information corresponding to the target device, a probability distribution model of feature data of the target device and a probability distribution model of detection point data with unshared data;

a weight determination module configured to determine a weight of the unshared data according to the probability distribution model of the feature data and the probability distribution model of the detection point data;

a model establishment module configured to establish a federated learning model according to the unshared data, the weight of the unshared data and a device fault label corresponding to the unshared data; and

a prediction module configured to predict a device fault of the target device according to the federated learning model.

23. A device fault prediction apparatus, wherein the device fault prediction apparatus comprises: a data acquisition module, a weight calculation module, a local model training module, a combined model establishment module and a fault prediction module, wherein

the data acquisition module is configured to acquire, according to attributes of a target device, a training data set configured to establish a prediction model for the target device, wherein sample data in the data set is shared data;

the weight calculation module is configured to calculate a weight of each piece of sample data in the training data set;

the local model training module is configured to train a fault prediction local model of the target device by using the weights;

the combined model establishment module is configured to establish a combined model based on the fault prediction local model and a combined learning algorithm; and

the fault prediction module is configured to perform fault prediction on the target device according to the combined model.

24. A device state prediction apparatus, comprising:

an acquisition module configured to acquire at least two pieces of feature data corresponding to a target device, at least two pieces of model training data corresponding to at least two reference devices and device state labels corresponding to the model training data respectively, the target device and the reference devices being of a same device type;

a weight determination module configured to determine error weights corresponding to the model training data according to the feature data; and

a training module configured to perform model training according to the model training data, the device state labels corresponding to the model training data respectively and the error weights corresponding to the model training data respectively, to determine a device state prediction model, the device state prediction model being configured to predict a device state of the target device.

25. A readable medium, comprising execution instructions, when a processor of an electronic device executes the execution instructions, the electronic device performing the method according to any one of claims 1 to 21.

26. An electronic device, comprising a processor and a memory storing execution instructions, when the processor executes the execution instructions stored by the memory, the processor performing the method according to any one of claims 1 to 21.

Determine feature information of a target device and detection point data information corresponding to the target device ⌐ 101

Determine, based on the feature information of the target device and the detection point data information corresponding to the target device, a probability distribution model of feature data of the target device and a probability distribution model of detection point data with unshared data ⌐ 102

Determine a weight of the unshared data according to the probability distribution model of the feature data and the probability distribution model of the detection point data ⌐ 103

Establish a federated learning model according to the unshared data, the weight of the unshared data and a device fault label corresponding to the unshared data ⌐ 104

Predict a device fault of the target device according to the federated learning model ⌐ 105

FIG. 1

Determine feature information of a target device and detection point data information corresponding to the target device — 201

Calculate, based on the feature information of the target device and a Gaussian mixture model, data distribution of feature data corresponding to the feature information, and determine the Gaussian mixture model with determined model parameters as a probability distribution model of the feature data — 202

Calculate, based on the detection point data information corresponding to the target device and the Gaussian mixture model, data distribution of detection point data information with unshared data corresponding to the detection point data information, and determine the Gaussian mixture model with determined model parameters as a probability distribution model of the unshared data — 203

Determine a target device distribution probability of the unshared data according to the probability distribution model of the feature data, and determine a detection point distribution probability of the unshared data according to the probability distribution model of the detection point data — 204

Determine a ratio of the target device distribution probability of the unshared data to the detection point distribution probability of the unshared data as the weight of the unshared data — 205

Determine the detection point local model according to the unshared data, the weight of the unshared data and the device fault label corresponding to the unshared data — 206

Repeatedly iterate the at least two detection point local models based on a combined learning algorithm, and establish the federated learning model based on at least two iterated detection point local models — 207

Predict a device fault of the target device according to the federated learning model — 208

FIG. 2

Determine, according to attributes of a target device, a training data set configured to establish a prediction model for the target device, wherein sample data in the data set is shared data — 301

Calculate a weight of each piece of sample data in the training data set — 302

Train a fault prediction local model of the target device by using the weights — 303

Establish a combined model based on the fault prediction local model and a combined learning algorithm — 304

Perform fault prediction on the target device according to the combined model — 305

FIG. 3

Acquire sensor feature data of each sample device and corresponding fault data; collect sensor feature data of a target device — 401

Label feature data of the target device and the sample device respectively, to obtain label data — 402

Train a classifier by combined learning based on the label data in step 402 — 403

Calculate weights of the feature data of the sample devices according to the classifier in step 403 — 404

Repeat the above steps to calculate the weights of the feature data of the sample devices — 405

Establish relationships between sensor feature data and device faults by combined learning based on the data of the sample devices — 406

Configure the model in step 406 to predict a fault probability of the target device — 407

FIG. 4

Acquire at least two pieces of feature data corresponding to a target device, at least two pieces of model training data corresponding to at least two reference devices and device state labels corresponding to the model training data respectively, the target device and the reference devices being of a same device type — 501

Determine error weights corresponding to the model training data according to the feature data — 502

Perform model training according to the model training data, the device state labels corresponding to the model training data respectively and the error weights corresponding to the model training data respectively, to determine a device state prediction model, the device state prediction model being configured to predict a device state of the target device — 503

FIG. 5

Acquire at least two pieces of feature data corresponding to a target device, at least two pieces of model training data corresponding to at least two reference devices and device state labels corresponding to the model training data respectively, the target device and the reference devices being of a same device type — 601

Determine, based on a first non-parameter estimation method corresponding to the model training data in the reference device to which the model training data belongs, a first distribution probability of the model training data in the model training data corresponding to the reference device to which the model training data belongs — 602

For each piece of the model training data, determine replacement data corresponding to the model training data from the feature data; and determine a second distribution probability of the replacement data in the feature data based on a second non-parameter estimation method — 603

For each piece of the model training data, determine a distribution probability ratio of the second distribution probability of the replacement data corresponding to the model training data to the first distribution probability of the model training data; and determine the distribution probability ratio as the error weight corresponding to the model training data — 604

Perform model training according to the model training data, the device state labels corresponding to the model training data respectively and the error weights corresponding to the model training data respectively, to determine a device state prediction model, the device state prediction model being configured to predict a device state of the target device — 605

FIG. 6

Information determination module —701

Probability model determination module —702

Weight determination module —703

Model establishment module —704

Prediction module —705

FIG. 7

Data acquisition module —801

Weight calculation module —802

Local model training module —803

Combined model establishment module —804

Fault prediction module —805

FIG. 8

Acquisition module ⎯ 901

Weight determination module ⎯ 902

Training module ⎯ 903

FIG. 9

Processor ⎯ 1001

⎯ 1003

Internal bus

Network interface ⎯ 1004

Internal memory
10021 ⎯

Non-volatile memory
10022 ⎯

Memory

1002 ⎯

FIG. 10

**EP 4 131 094 A1**

## INTERNATIONAL SEARCH REPORT

International application No.

**PCT/CN2021/101314**

| A. | CLASSIFICATION OF SUBJECT MATTER |
|---|---|

G06Q 10/00(2012.01)i;  G06N 20/00(2019.01)i

According to International Patent Classification (IPC) or to both national classification and IPC

| B. | FIELDS SEARCHED |
|---|---|

Minimum documentation searched (classification system followed by classification symbols)

G06Q G06N G06F

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 故障, 异常, 预测, 检测, 迁移, 联邦学习, 联合学习, 权重, 权值, 概率分布, 局部模型, 模型, 训练, fault, abnormity, diagnosis, transfer learning, federated learning, instance, weight, probability, part, model?, train+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111678696 A (NANCHANG HANGKONG UNIVERSITY) 18 September 2020 (2020-09-18) description, paragraphs [0030]-[0064] | 8-9, 12-14, 23, 25-26 |
| Y | CN 111506862 A (NORTHWESTERN POLYTECHNICAL UNIVERSITY) 07 August 2020 (2020-08-07) description paragraphs [0006]-[0011], [0048]-[0075] | 8-9, 12-14, 23, 25-26 |
| A | CN 111158964 A (BEIJING UNIVERSITY OF POSTS AND TELECOMMUNICATIONS) 15 May 2020 (2020-05-15) entire document | 1-26 |
| A | US 2020210824 A1 (UTOPUS INSIGHTS, INC.) 02 July 2020 (2020-07-02) entire document | 1-26 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 August 2021** | **26 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

27

**INTERNATIONAL SEARCH REPORT**
Information on patent family members

International application No.

**PCT/CN2021/101314**

| Patent document cited in search report | | | Publication date (day/month/year) | Patent family member(s) | | | Publication date (day/month/year) |
|---|---|---|---|---|---|---|---|
| CN | 111678696 | A | 18 September 2020 | None | | | |
| CN | 111506862 | A | 07 August 2020 | None | | | |
| CN | 111158964 | A | 15 May 2020 | None | | | |
| US | 2020210824 | A1 | 02 July 2020 | WO | 2020140128 | A1 | 02 July 2020 |

Form PCT/ISA/210 (patent family annex) (January 2015)